# EUROPEAN PATENT SPECIFICATION

(11) **EP 3 399 602 B1**
(45) Date of publication and mention of the grant of the patent: **30.12.2020**
(21) Application number: 17169324.5
(22) Date of filing: 03.05.2017
(51) Int. Cl.: H01R 13/66, G01K 1/14, B60L 53/16, G01K 7/22, H01R 13/506, H01R 13/713

(54) **THERMISTOR HOLDER ASSEMBLY**
THERMISTORHALTERANORDNUNG
ASSEMBLAGE DE SUPPORT DE THERMISTOR

(43) Date of publication of application: 07.11.2018
(73) Proprietor: Aptiv Technologies Limited, St. Michael (BB)
(72) Inventor: SEBASTIAN, Anup, 600041 Chennai (IN); RAMAKRISHNAN, Prasanna, 600117 Chennai (IN); HERNANDEZ, Aurélie, 78600 Maisons-Laffitte (FR)
(74) Representative: Manitz Finsterwald Patent- und Rechtsanwaltspartnerschaft mbB

(56) References cited:
- WO-A1-2017/043548
- DE-A1-102014 111 831
- DE-T5-112014 003 014
- US-A1- 2016 153 839

## Description

### TECHNICAL FIELD OF INVENTION

The present invention relates to a terminal position assurance and thermistor holder device for a high power connector for electrical vehicles. The terminal position and thermistor holder device comprises a terminal position assurance device housing and a thermistor holder clip.

### BACKGROUND OF INVENTION

The development of electric cars is still in progress and the need to rapidly recharge the batteries of an electric vehicle still exists. As this technology continues to advance, new types of batteries and new types of charging systems are being designed. It is desirable, in general, to be able to charge an electric vehicle as rapidly as possible. Rapid charging minimizes downtime. To reach this target a very large amount of current must be supplied to accomplish recharging within the allotted time frame. This high currents generate heat along the charging path. The heat distribution along the charging path has to be monitored to prevent damages. To monitor the temperature in a charging connector temperature sensors are used. The prior art document WO2014208483 discloses a connector in which a thermistor and an electric wire are sandwiched and fixed by a main rear holder and a sub-rear holder. While assembling this connector, the rear holder parts need to be preassembled carefully, adjusting and fixing the thermistor between the rear holder parts, what is sometimes difficult to carry out in the raw environment of a production plant. The holder parts, the thermistor and the wire have to be assembled at the same time what decreases the flexibility of the process while assembling this connector. The holding means for the thermistor increase the length (along the mating axis) of the holder parts. Document DE112014003014T5 discloses a thermistor holder assembly. Furthermore document WO2017/043548A1 discloses the preamble of independent claim 1. Documents DE102014111831A1 and US2016/153839A1 disclose also thermistor holder assemblies.

Therefore, in one aspect, the present invention improves the state of the art by providing a thermistor holder assembly that is robust, flexible in use and small in size. Furthermore present invention reduces also the production costs for a thermistor holder assembly.

These and other objects which become apparent upon reading the following description are solved by a thermistor holder assembly according to independent claim 1.

### SUMMARY OF THE INVENTION

The present application relates to a thermistor holder assembly, in particular for a high current charging connector.

Generally preferred the thermistor holder assembly for a high current charging connector comprises a terminal retaining structure, attachable to a high current charging connector housing. The terminal retraining structure comprises a tunnel to guide a high current wire through the terminal retraining structure. The terminal retraining structure comprises a clip cavity that extends along a mating axis of the high current charging connector housing. The clip cavity extends perpendicular to the mating axis into a tunnel wall. The assembly comprises a thermistor holder clip adapted to hold a thermal sensor and configured to be clipped to the high current wire, whereby the thermistor holder clip is, at least partly, received and held in the clip cavity.

The thermistor holder assembly provides an opportunity to position the thermal sensor close to, or in touch to, the high current wire and collect this way reliable thermal data. Furthermore the thermal sensor is captured inside the terminal retaining structure that makes the necessary length of the terminal retaining structure (along the mating axis) smaller. There is no need to increase the length of the terminal retaining structure to provide holding means for the thermal sensor. Due to the short length of the terminal retaining structure the thermal sensor is closer to the terminal that is a hotspot and difficult to monitor. Due to this the thermistor holder assembly can provide valuable temperature data to calculate the terminal temperature. Furthermore the holder clip is an additional mechanical link between the high current charging connector housing and the high current wire, improving mechanical robustness and keeping away vibration from the terminal.

According to a preferred embodiment, the thermistor holder assembly comprising a thermal sensor, having a cylindrical body with a first sensor end and a second sensor end. At least one sensor wire extends from the thermal sensor at the second sensor end. Thermal sensors that are available on the market can be used in this assembly which makes the assembly less costly.

Preferably the terminal retraining structure has a back side, facing in opposite direction to a mating direction of the high current charging connector. The clip cavity extends from the back side along the mating axis in the mating direction of the high current charging connector. This design makes it possible to insert thermistor holder clip coming from the backside. The thermistor holder clip can be inserted at several points in time while assembling the charging connector. That makes the production process more flexible.

Advantageously, the thermistor holder clip has an elongated clip base, aligned parallel with the longitude of the high current wire, with a first clip end and a second clip end, whereby a first clip wing and a second clip wing extend perpendicular to the elongated clip base and between the first clip end and the second clip end from the elongated clip base, whereby the clip wings extend spaced apart from each other and parallel to each other. The elongated clip base holds the thermal sensor along the high current wire. Furthermore the elongated clip base is the base for all protruding away portions of the holder clip.

Preferably the first clip wing and the second clip wing and the elongated clip base define a u-shape in cross-section. This shape makes it possible to clip the thermistor holder clip to the high current wire, by taking the high current wire between the two legs of the U.

Advantageously, the distance between the first clip wing and the second clip wing varies along the wing extension. The distance between the first clip wing and the second clip wing alternates along the wing extension. Varying the distance along the extension of the wings define portions that can capture cylindrical bodies like wires or sensors. The narrow regions defined border portions between the wider portions.

Preferably the portions with a greater distance between the first clip wing and the second clip wing defining wire spaces or a sensor spaces, adapted to hold a high current wire or the thermal sensor.

Preferably at least one protrusion arranged on the first clip wing and/or the second clip wing, protruding between the first clip wing and the second clip wing and a portion of the clip base defines a sensor space wherein the thermal sensor is, held between the at least one protrusion, a portion of the clip wings and the portion of the clip base. This design makes it possible to hold the thermal sensor secure in the holder clip.

In a preferred embodiment, at least one wing end of first clip wing and/or the second clip wing is formed away from the other wing end. This shape of the wing end makes it easier to clip the thermistor holder clip to the high current wire. The sloped end moves along the outer diameter of the high current wire while bending the wings away from each other.

Advantageously, the thermistor holder clip comprises a flexible support arm extending from the elongated clip base towards the second clip end, whereby the support arm extends between the first clip wing and the second clip wing. The support arm comprises a sensor lock protrusion on its free end, protruding perpendicular to the support arm and the elongated clip base, having a sensor stop protrusion on the first clip end, whereby the sensor lock protrusion and the sensor stop protrusion cooperate with the first sensor end and the second sensor end to hold the thermal sensor in position. Due to the flexible support arm the thermal sensor can be softly inserted and easy locked in the thermistor holder clip.

Advantageously, the thermistor holder clip comprises a clip lock protrusion, protruding perpendicular, to the elongated clip base outwards. The clip lock protrusion being arranged on the free end of a flexible clip holder arm. The flexible clip holder arm protrudes from the elongated clip base, whereby the clip lock protrusion extends in a different direction than the first clip wing and the second clip wing (105). Due to the flexible clip holder arm, the thermistor holder clip can be softly inserted and easy locked in the clip cavity.

Preferably the thermistor holder clip comprises at least one clip guiding rib arranged on and aligned along the elongated clip base, whereby the clip cavity comprises at least one clip guiding groove aligned along the mating axis and cooperating with the clip guiding rib. The rib is dimensioned to fit into the groove whereby the groove guides the thermistor holder clip along the mating axis while insertion. In the final position, when the thermistor holder clip is fully inserted into the clip cavity, the cooperation of rib and groove prevents tilting of the holder clip in relation to the mating axis and also rotation of the holder clip around the high current wire. The position of the rib in relation to the groove can also be used as coding function to assure a correct usage of clip holder clip version and terminal retaining structure, when using more than one version.

Preferably the clip cavity comprises at least one clip locking edge, whereby a clip lock protrusion arranged on the thermistor holder clip engages to the clip locking edge and locks the thermistor holder clip into the clip cavity. The clip locking edge can be easy designed into the terminal retaining structure while designing a high current charging connector. That makes the implementation of the invention easy to further developments.

The invention also comprises a high current charging harness, comprising the thermistor holder assembly, comprising a thermal sensor held by the thermistor holder clip, and a high current charging connector housing with an inserted terminal that is connected to a high current wire.

Description of the preferred embodiments

In the following, the invention is described exemplarily with reference to the enclosed figures, in which
- Fig. 1: shows a perspective, exploded view of a thermistor holder assembly in accordance with the present invention;
- Fig. 2a, 2b: show perspective views of the thermistor holder clip and the thermal sensor;
- Fig. 3a, 3b: show perspective views of the thermistor holder clip;
- Fig. 4a, 4b: show cut views of the thermistor holder clip with assembled thermal sensor;
- Fig. 5a, 5b: show detailed views of the thermistor holder assembly without inserted thermistor holder clip and with inserted thermistor holder clip included thermal sensor;
- Fig. 6a, 6b: show the process steps of clipping the thermistor holder clip to the high current wire and moving it to the clip cavity;
- Fig. 7a, 7b: show a perspective view and a cut view of the thermistor holder with locked clip holder;

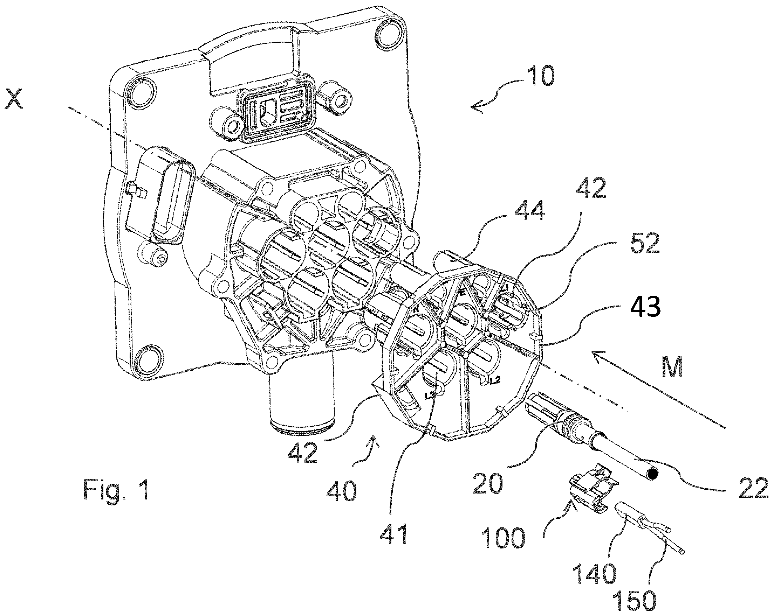

Fig. 1 shows a perspective, exploded view of a thermistor holder assembly for a high current charging connector, comprising a terminal retaining structure 40. The terminal retaining structure 40 is attachable to a high current charging connector housing 10. The terminal retraining structure 40 comprises a tunnel 41 to guide a high current wire 22 through the terminal retraining structure 40. The terminal retraining structure 40 comprises a clip cavity 52 that extends along a mating axis X of the high current charging connector housing 10 and wherein the clip cavity 52 extends perpendicular to the mating axis in to a tunnel wall 42. The assembly comprises a thermistor holder clip 100 adapted to hold a thermal sensor 140 and configured to be clipped to the high current wire 22. In a stage when the thermistor holder assembly is finally assembled the thermistor holder clip 100 is, at least partly, received and held in the clip cavity 52. The terminal retraining structure 40 has a front side close to the terminal 20 and a back side 43, facing in opposite direction to a mating direction M of the high current charging connector. The clip cavity 52 extends from the back side along the mating axis X in the mating direction M of the high current charging connector.

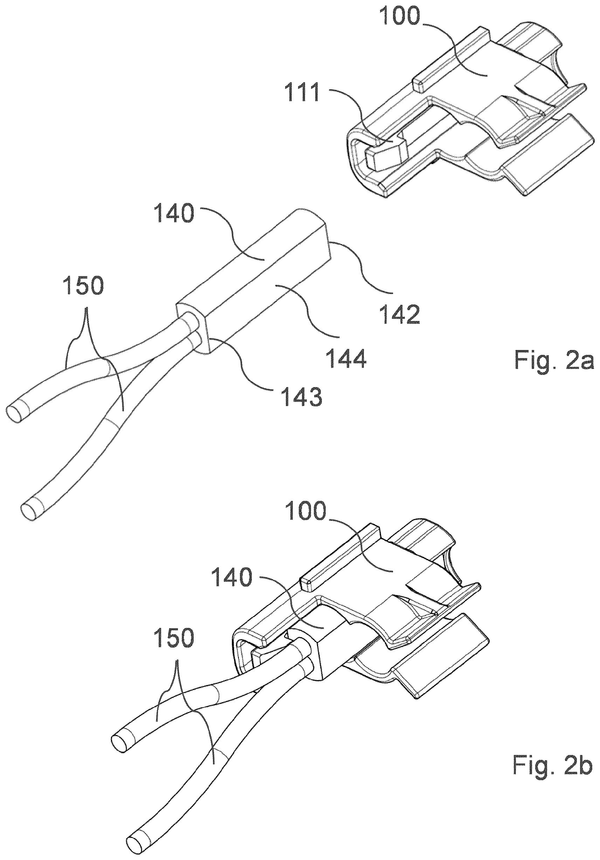

Fig. 2a, 2b show perspective views of the thermistor holder clip 100 and the thermal sensor 140. The thermal sensor 140 has an elongated cylindrical body with a first sensor end 142 and a second sensor end 143. In this embodiment the sensor body has a flatted area 144 to increase the contact are to the high current wire 22. From the second sensor end 143 extend two sensor wires 150. Figure 2a shows the thermal sensor 140 and holder clip 100 as separate parts. Figure 2b shows the thermal sensor 140 and holder clip 100 as an assembled sub assembly ready to be inserted to the clip cavity 52.

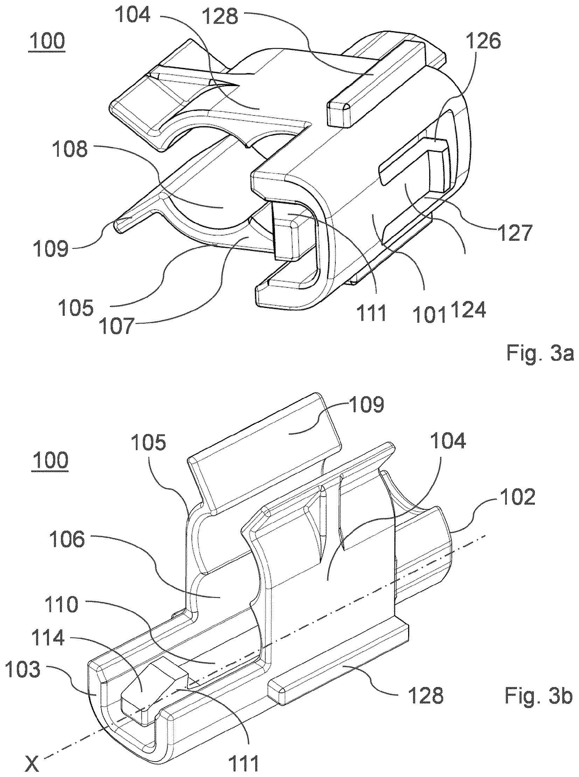

Fig. 3a, 3b show perspective views of the thermistor holder clip 100. The thermistor holder clip 100 has an elongated clip base 101, aligned parallel with the longitude of the high current wire 22 (not shown). The thermistor holder clip 100 has a first clip end 102 and a second clip end 103. A first clip wing 104 and a second clip wing 105 extend perpendicular to the elongated clip base 101 and between the first clip end 102 and the second clip end 103 from the elongated clip base 101.

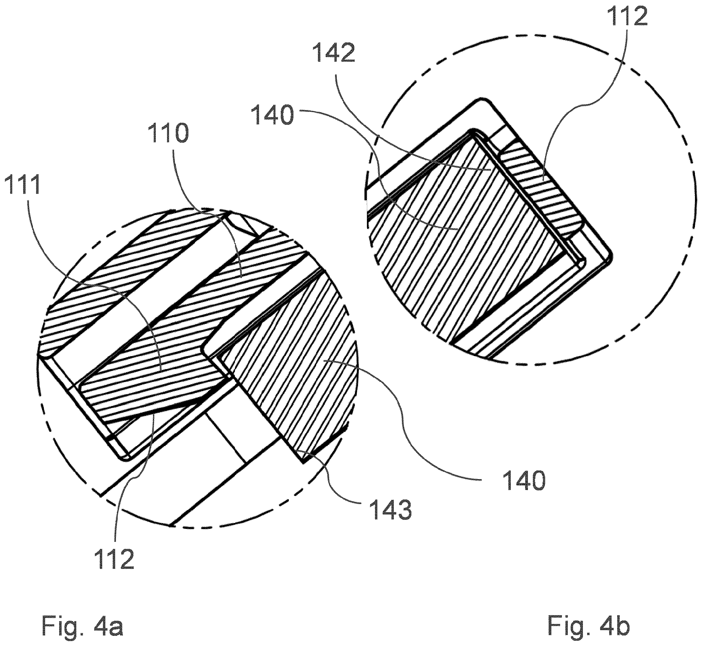

The clip wings 104, 105 extend spaced apart from each other and parallel to each other. The first clip wing 104 and the second clip wing 105 and the elongated clip base 101 defining a u-shape in cross-section. The distance between the first clip wing 104 and the second clip wing 105 varies along the wing extension. The distance between the first clip wing 104 and the second clip wing 105 alternates along the wing extension. The portions with a greater distance between the first clip wing 104 and the second clip wing 105 defining a wire space 108 or a sensor space 106, adapted to hold a high current wire 22 or the thermal sensor 140. At least one protrusion 107 arranged on the first clip wing 104 and/or the second clip wing 105, protruding between the first clip wing 104 and the second clip wing 105. The protrusion and a portion of the clip base 101 defines a sensor space 106. The thermal sensor 140 is held between the at least one protrusion 107, a portion of the clip wings 104, 105 and the portion of the clip base 101. At least one wing end 109 of first clip wing 104 and/or the second clip wing 105, is formed away from the other wing end. The thermistor holder clip 100 comprises a flexible support arm 110 extending from the elongated clip base 101 towards the second clip end 103, whereby the support arm 110 extends between the first clip wing 104 and the second clip wing 105. The support arm 110 comprises a sensor lock protrusion 111 on its free end, protruding perpendicular to the support arm 110 and the elongated clip base 101. The clip base 101 has a sensor stop protrusion 112 on the first clip end 102. The sensor lock protrusion 111 and the sensor stop protrusion 112 cooperate with the first sensor end 142 and the second sensor end 143 to hold the thermal sensor 140 in position (shown in figure 4a, 4b). Furthermore the thermistor holder clip 100 comprises a clip lock protrusion 126, protruding perpendicular, to the elongated clip base 101 outwards. The clip lock protrusion 126 being arranged on the free end of a flexible clip holder arm 124. The flexible clip holder arm 124 protrudes from the elongated clip base 101, whereby the clip lock protrusion 126 extends in a different direction than the first clip wing 104 and the second clip wing 105. Finally, the thermistor holder clip 100 comprises at least one clip guiding rib 128 arranged on and aligned along the elongated clip base 101. Fig. 4a, 4b show cut views of the thermistor holder clip 100 with assembled thermal sensor 140 (as shown in figure 2b).the cut is inserted along the mating axis X and between the clip wing 104, 105. It is best show how the sensor lock protrusion 111 and the sensor stop protrusion 112 cooperate with the first sensor end 142 and the second sensor end 143 to hold the thermal sensor 140 in position.

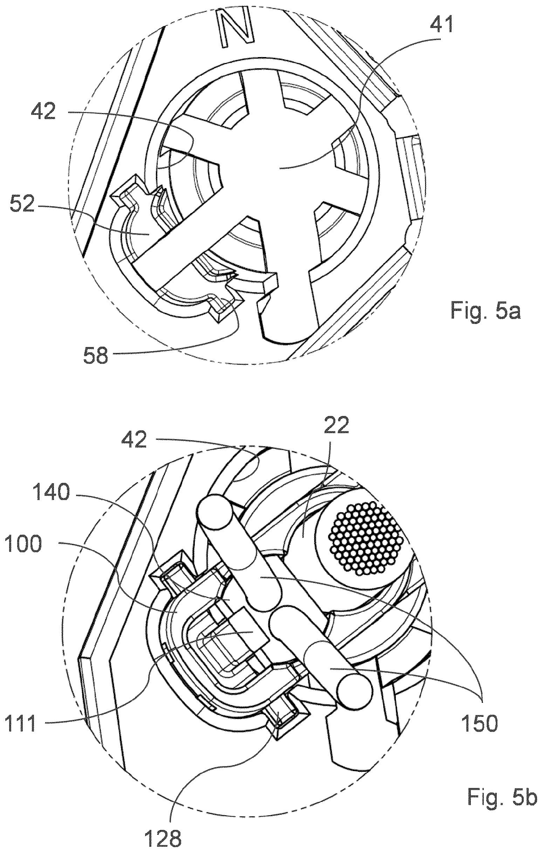

Fig. 5a, 5b show detailed views of the terminal retaining structure 40.without inserted thermistor holder clip 100 and with inserted thermistor holder clip 100 included thermal sensor 140 and a high current wire 22. The views show a back side 43 of the thermistor holder assembly. Figure 5a show the empty tunnel 41 and the empty clip cavity 52. The clip cavity 52 comprises at least one clip guiding groove 58 extending from the clip cavity 52. Figure 5b show the tunnel 41 filled with a high current wire 22, the clip cavity 52 is filled with the holder clip 100 included the thermal sensor 140. The clip guiding rib 128 and the clip guiding groove 58 cooperate to hold the holder clip 100 in the clip cavity 52.

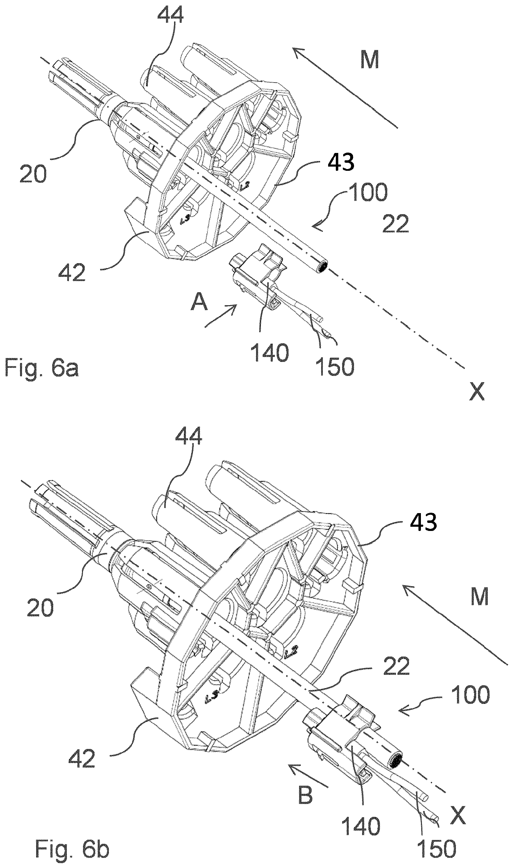

Fig. 6a, 6b show the process steps of clipping the thermistor holder clip 100 included thermal sensor 140 to the high current wire 22 and then moving it to the clip cavity 52. The first step comprises moving the holder clip 100 in a direction, perpendicular to the mating axis, to the high current wire 22 until the clip snaps to the high current wire 22. Than moving the holder clip 100 in a direction B towards the clip cavity 52, along the mating axis X. When moving the holder clip 100 towards the clip cavity 52 the guiding rib 128 and the clip guiding groove 58 have to be aligned to each other by rotating around the high current wire 22.

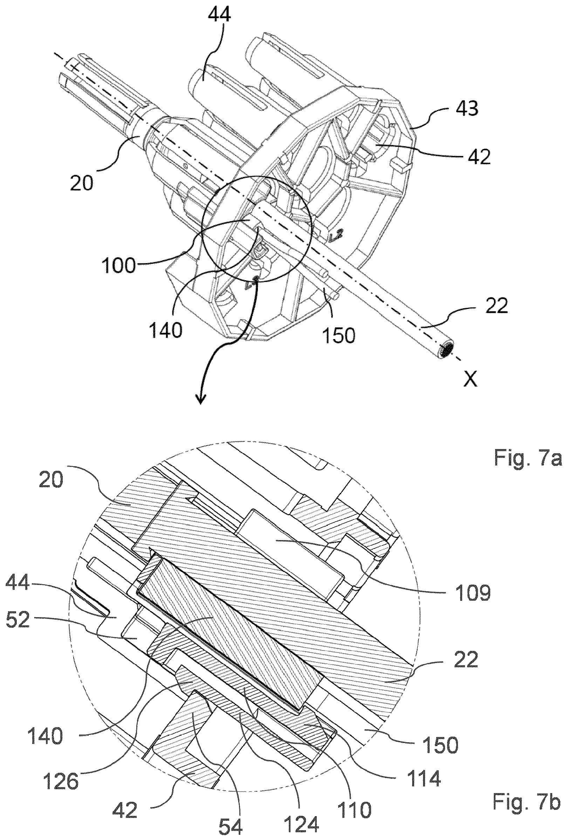

Fig. 7a show a perspective view of the thermistor holder assembly with in the terminal retaining structure 40 locked thermistor holder clip 100. Figure 7b shows details of figure 7a in a cut view. The cut extends along the mating axis X and between the clip wings 104, 105 (as in figures 3a, 3b). The thermistor holder clip 100 comprises a clip lock protrusion 126, protruding perpendicular, to the elongated clip base 101 outwards. The clip lock protrusion 126 being arranged on the free end of a flexible clip holder arm 124. The flexible clip holder arm 124 protrudes from the elongated clip base 101, whereby the clip lock protrusion 126 extends in a different direction than the first clip wing 104 and the second clip wing 105. The clip cavity 52 comprises at least one clip locking edge 54. The clip lock protrusion 126 arranged on the thermistor holder clip 100 is configured to engage to the clip locking edge 54 and lock the thermistor holder clip 100 the clip cavity 52.

## Claims

1. A thermistor holder assembly for a high current charging connector, comprising a terminal retaining structure (40),
attachable to a high current charging connector housing (10),
said terminal retraining structure comprises a tunnel (41) configured to guide a high current wire (22) through the terminal retraining structure (40), whereby the terminal retraining structure
comprises a clip cavity (52) that extends along a mating axis (X) which is parallel to an axis along which the tunnel (40) extends and wherein
the clip cavity extends perpendicular to the mating axis (X) into a tunnel wall (42), the assembly further comprising a thermistor holder clip (100) adapted to hold a thermal sensor (140) and
configured to be clipped to the high current wire (22), whereby the thermistor holder clip is, at least partly, received and held in the clip cavity, wherein the thermistor holder clip (100) has an elongated clip base (101) aligned along an axis parallel with the mating axis (X) and having a first clip end (102)
and a second clip end (103), **characterized in that** a first clip wing (104) and a second clip wing (105) extend perpendicular to the elongated clip base and between the first clip end (102) and the second clip end (103) from the elongated clip base, whereby the clip wings (104, 105) extend spaced apart from and parallel to each other.

2. A thermistor holder assembly according to claim 1, comprising a thermal sensor (140), having a cylindrical body with a first sensor end (142) and a second sensor end (143), at least one sensor wire (150) extends from the thermal sensor (140) at the second sensor end (143).

3. A thermistor holder assembly according to any preceding claim, wherein the terminal retraining structure (40) has a back side (43), facing in opposite direction of the tunnel (41) extension's direction (M) whereby the clip cavity (52) extends from the back side along mating axis (X).

4. A thermistor holder assembly according to claim 1, wherein the first clip wing (104), the second clip wing (105) and the elongated clip base (101) define a u-shape in cross-section.

5. A thermistor holder assembly according to claim 1 or 4, wherein the distance between the first clip wing (104) and the second clip wing (105) varies along the wing extension.

6. A thermistor holder assembly according to claim 1 or any of claims 4-5, wherein the distance between the first clip wing (104) and the second clip wing (105) alternates along the wing extension.

7. A thermistor holder assembly according to claim 1 or any of claims 4-6, wherein the portions with a greater distance between the first clip wing (104) and the second clip wing (105) defining a wire space (108) or a sensor space (106) are adapted respectively to hold a high current wire (22) or the thermal sensor (140).

8. A thermistor holder assembly according to claim 1 or any of claims 4-6, wherein at least one protrusion (107) is arranged on the first clip wing (104) and/or the second clip wing (105),
protruding between the first clip wing (104) and the second clip wing (105), wherein a portion of the clip base (101) defines a sensor space (106), and wherein the thermal sensor (140) is held between the at least one protrusion (107), a portion of the clip wings (104, 105) and the portion of the clip base (101).

9. A thermistor holder assembly according to claim 1 or any of claims 4-8, wherein at least one wing end (109) of the first clip wing (104) is formed away from the at least one wing end of the second clip wing (105).

10. A thermistor holder assembly according to claim 1 or any of claims 4-9, wherein the thermistor holder clip (100) comprises a flexible support arm (110) extending from the elongated clip base (101) towards the second clip end (103), whereby the support arm (110) extends between the first clip wing (104) and the second clip wing (105).

11. A thermistor holder assembly according to claim 10, whereby the support arm (110) comprises a sensor lock protrusion (111) on its free end, protruding perpendicular to the support arm and the elongated clip base (101), having a sensor stop protrusion (112) on the first clip end (102), whereby the sensor lock protrusion and the sensor stop protrusion cooperate with the first sensor end (142) and the second sensor end (143) to hold the thermal sensor (140) in position.

12. A thermistor holder assembly according to claim 1 or any of claims 4-11, whereby the thermistor holder clip (100) comprises a clip lock protrusion (126), protruding perpendicular, to the elongated clip base (101) outwards, the clip lock protrusion being arranged on the free end of a flexible clip holder arm (124), said flexible clip holder arm (124) protrudes from the elongated clip base (101), whereby the clip lock protrusion (126) extends in a different direction than the first clip wing (104) and the second clip wing (105).

13. A thermistor holder assembly according to any preceding claim, whereby the thermistor holder clip (100) comprises at least one clip guiding rib (128) arranged on and aligned along the elongated clip base (101), whereby the clip cavity (52) comprises at least one clip guiding groove (58) aligned along the mating axis (X) and cooperating with the clip guiding rib (128).

14. A thermistor holder assembly according to any preceding claim, whereby the clip cavity (52) comprises at least one clip locking edge (54), whereby a clip lock protrusion (126) arranged on the thermistor holder clip (100) engages to the clip locking edge and locks the thermistor holder clip (100) into the clip cavity.

## Patentansprüche

1. Thermistorhalteranordnung für einen Hochstrom-Ladestecker, die eine Anschlusshaltestruktur (40) umfasst, die an einem Gehäuse (10) des Hochstrom-Ladesteckers angebracht werden kann, wobei die Anschlusshaltestruktur einen Tunnel (41) umfasst, der konfiguriert ist, um einen Hochstromdraht (22) durch die Anschlusshaltestruktur (40) hindurch zu führen, wobei die Anschlusshaltestruktur einen Klammerhohlraum (52) umfasst, der sich entlang einer Steckachse (X) erstreckt, die parallel zu einer Achse ist, entlang welcher sich der Tunnel (40) erstreckt, und wobei sich der Klammerhohlraum rechtwinklig zu der Steckachse (X) in eine Tunnelwand (42) der Anordnung hinein erstreckt, ferner umfassend eine Thermistorhalterklammer (100), die angepasst ist, um einen Temperatursensor (140) zu halten und zum Klammern an den Hochstromdraht (22) konfiguriert ist, wobei die Thermistorhalterklammer zumindest teilweise in dem Klammerhohlraum aufgenommen und gehalten wird, wobei die Thermistorhalterklammer (100) eine längliche Klammerbasis (101) aufweist, die entlang einer Achse parallel zu der Steckachse (X) ausgerichtet ist und ein erstes Klammerende (102) und ein zweites Klammerende (103) aufweist,
**dadurch gekennzeichnet, dass**
sich ein erster Klammerflügel (104) und ein zweiter Klammerflügel (105) rechtwinklig zu der länglichen Klammerbasis und zwischen dem ersten Klammerende (102) und dem zweiten Klammerende (103) von der länglichen Klammerbasis aus erstrecken, wobei sich die Klammerflügel (104, 105) voneinander beabstandet und zueinander parallel erstrecken.

2. Thermistorhalteranordnung nach Anspruch 1, umfassend einen Temperatursensor (140), der einen zylindrischen Körper mit einem ersten Sensorende (142) und einem zweiten Sensorende (143) aufweist, wobei sich mindestens ein Sensordraht (150) an dem zweiten Sensorende (143) von dem Temperatursensor (140) aus erstreckt.

3. Thermistorhalteranordnung nach einem der vorstehenden Ansprüche, wobei die Anschlusshaltestruktur (40) eine Rückseite (43) aufweist, die in eine Richtung entgegengesetzt der Ausdehnungsrichtung (M) des Tunnels (41) weist, wobei sich der Klammerhohlraum (52) von der Rückseite aus entlang der Steckachse (X) erstreckt.

4. Thermistorhalteranordnung nach Anspruch 1, wobei der erste Klammerflügel (104), der zweite Klammerflügel (105) und die längliche Klammerbasis (101) im Querschnitt eine U-Form definieren.

5. Thermistorhalteranordnung nach Anspruch 1 oder 4, wobei die Distanz zwischen dem ersten Klammerflügel (104) und dem zweiten Klammerflügel (105) entlang der Flügelausdehnung variiert.

6. Thermistorhalteranordnung nach Anspruch 1 oder einem der Ansprüche 4-5, wobei die Distanz zwischen dem ersten Klammerflügel (104) und dem zweiten Klammerflügel (105) entlang der Flügelausdehnung alterniert.

7. Thermistorhalteranordnung nach Anspruch 1 oder einem der Ansprüche 4-6, wobei die Abschnitte mit einer größeren Distanz zwischen dem ersten Klammerflügel (104) und dem zweiten Klammerflügel (105), die einen Drahtraum (108) oder einen Sensorraum (106) definieren, jeweils angepasst sind, um einen Hochstromdraht (22) oder den Temperatursensor (140) zu halten.

8. Thermistorhalteranordnung nach Anspruch 1 oder einem der Ansprüche 4-6, wobei mindestens ein Vorsprung (107) an dem ersten Klammerflügel (104) und/oder dem zweiten Klammerflügel (105) angeordnet ist, der zwischen dem ersten Klammerflügel (104) und dem zweiten Klammerflügel (105) hervorsteht, wobei ein Abschnitt der Klammerbasis (101) einen Sensorraum (106) definiert, und wobei der Temperatursensor (140) zwischen dem mindestens einem Vorsprung (107), einem Abschnitt der Klammerflügel (104,105) und dem Abschnitt der Klammerbasis (101) gehalten wird.

9. Thermistorhalteranordnung nach Anspruch 1 oder einem der Ansprüche 4-8, wobei mindestens ein Flügelende (109) des ersten Klammerflügels (104) von dem mindestens einen Flügelende des zweiten Klammerflügels (105) weg geformt ist.

10. Thermistorhalteranordnung nach Anspruch 1 oder einem der Ansprüche 4-9, wobei die Thermistorhalterklammer (100) einen flexiblen Stützarm (110) umfasst, der sich von der länglichen Klammerbasis (101) zu dem zweiten Klammerende (103) erstreckt, wobei sich der Stützarm (110) zwischen dem ersten Klammerflügel (104) und dem zweiten Klammerflügel (105) erstreckt.

11. Thermistorhalteranordnung nach Anspruch 10, wobei der Stützarm (110) an seinem freien Ende einen Sensorverriegelungsvorsprung (111) umfasst, der rechtwinklig zu dem Stützarm und der länglichen Klammerbasis (101) vorspringt, und einen Sensoranschlagsvorsprung (112) an dem ersten Klammerende (102) aufweist, wobei der Sensorverriegelungsvorsprung und der Sensoranschlagvorsprung mit dem ersten Sensorende (142) und dem zweiten Sensorende (143) zusammenarbeiten, um den Temperatursensor (140) in Position zu halten.

12. Thermistorhalteranordnung nach Anspruch 1 oder einem der Ansprüche 4-11, wobei die Thermistorhalterklammer (100) einen Klammerverriegelungsvorsprung (126) umfasst, der rechtwinklig zu der länglichen Klammerbasis (101) nach außen vorspringt, wobei der Klammerverriegelungsvorsprung an dem freien Ende eines flexiblen Klammerhalterarms (124) angeordnet ist, wobei der flexible Klammerhalterarm (124) aus der länglichen Klammerbasis (101) vorspringt, wobei sich der Klammerverriegelungsvorsprung (126) in eine andere Richtung als der erste Klammerflügel (104) und der zweite Klammerflügel (105) erstreckt.

13. Thermistorhalteranordnung nach einem der vorstehenden Ansprüche, wobei die Thermistorhalterklammer (100) mindestens eine Klammerführungsrippe (128) umfasst, die an der länglichen Klammerbasis (101) angeordnet und entlang dieser ausgerichtet ist, wobei der Klammerhohlraum (52) mindestens eine Klammerführungsrille (58) umfasst, die entlang der Steckachse (X) ausgerichtet ist und mit der Klammerführungsrippe (128) zusammenarbeitet.

14. Thermistorhalteranordnung nach einem der vorstehenden Ansprüche, wobei der Klammerhohlraum (52) mindestens eine Klammerverriegelungskante (54) umfasst, wobei ein an der Thermistorhalterklammer (100) angeordneter Klammerverriegelungsvorsprung (126) in die Klammerverriegelungskante eingreift und die Thermistorhalterklammer (100) in dem Klammerhohlraum verriegelt.

## Revendications

1. Assemblage formant porte-thermistance destiné à un connecteur de charge à courant élevé, comprenant une structure de retenue de borne (40), susceptible d'être attachée à un boîtier de connecteur de charge à courant élevé (10),
ladite structure de retenue de borne comprend un tunnel (41) configuré pour guider un fil à courant élevé (22) à travers la structure de retenue de borne (40), de sorte que la structure de retenue de borne comprend une cavité pour clip (52) qui s'étend le long d'un axe d'accouplement (X) qui est parallèle à un axe le long duquel le tunnel (40) s'étend, et dans lequel la cavité pour clip s'étend perpendiculairement à l'axe d'accouplement (X) jusque dans une paroi (42) du tunnel, l'assemblage comprenant en outre un clip porte-thermistance (100) adapté pour porter un capteur thermique (140) et configuré pour être clipsé sur le fil à courant élevé (22), de sorte que le clip porte-thermistance est au moins partiellement reçu et porté dans la cavité pour clip, dans lequel le clip porte-thermistance (100) comporte une base de clip allongée (101) alignée le long d'un axe parallèle à l'axe d'accouplement (X) et ayant une première extrémité de clip (102) et une seconde extrémité de clip (103),
**caractérisé en ce qu'**une première ailette de clip (104) et une seconde ailette de clip (105) s'étendent perpendiculairement à la base de clip allongée et entre la première extrémité de clip (102) et la seconde extrémité de clip (103) depuis la base de clip allongée, grâce à quoi les ailettes de clip (104, 105) s'étendent en étant espacées l'une de l'autre et parallèles l'une à l'autre.

2. Assemblage formant porte-thermistance selon la revendication 1, comprenant un capteur thermique (140), ayant un corps cylindrique avec une première extrémité de capteur (142) et une seconde extrémité de capteur (143), au moins un fil de capteur (150) s'étendant depuis le capteur thermique (140) à la seconde extrémité de capteur (143).

3. Assemblage formant porte-thermistance selon l'une quelconque des revendications précédentes, dans lequel la structure de retenue de borne (40) comporte un côté arrière (43) faisant face dans une direction opposée à la direction d'extension (M) du tunnel (41), de sorte que la cavité pour clip (52) s'étend depuis le côté arrière le long de l'axe d'accouplement (X).

4. Assemblage formant porte-thermistance selon la revendication 1, dans lequel la première ailette de clip (104), la seconde ailette de clip (105) et la base de clip allongée (101) définissent une forme en u en section transversale.

5. Assemblage formant porte-thermistance selon la revendication 1 ou 4, dans lequel la distance entre la première ailette de clip (104) et la seconde ailette de clip (105) varie le long de l'extension des ailettes.

6. Assemblage formant porte-thermistance selon la revendication 1 ou l'une quelconque des revendications 4 et 5, dans lequel la distance entre la première ailette de clip (104) et la seconde ailette de clip (105) alterne le long de l'extension des ailettes.

7. Assemblage formant porte-thermistance selon la revendication 1 ou l'une quelconque des revendications 4 à 6, dans lequel les portions présentant une plus grande distance entre la première ailette de clip (104) et la seconde ailette de clip (105) définissant un espace pour fil (108) ou un espace pour capteur (106) sont adaptées pour supporter respectivement un fil à courant élevé (22) ou le capteur thermique (140).

8. Assemblage formant porte-thermistance selon la revendication 1 ou l'une quelconque des revendications 4 à 6, dans lequel au moins une projection (107) est agencée sur la première ailette de clip (104) et/ou la seconde ailette de clip (105), en se projetant entre la première ailette de clip (104) et la seconde ailette de clip (105), dans lequel une portion de la base de clip (101) définit un espace pour capteur (116), et dans lequel le capteur thermique (104) est supporté entre ladite au moins une projection (107), une portion des ailettes de clip (104, 105) et la portion de la base de clip (101).

9. Assemblage formant porte-thermistance selon la revendication 1 ou l'une quelconque des revendications 4 à 8, dans lequel au moins une extrémité d'ailette (109) de la première ailette de clip (104) est formée en éloignement de ladite au moins une extrémité d'ailette de la seconde ailette de clip (105).

10. Assemblage formant porte-thermistance selon la revendication 1 ou l'une quelconque des revendications 4 à 9, dans lequel le clip porte-thermistance (100) comprend un bras de support flexible (110) s'étendant depuis la base de clip allongée (101) en direction de la seconde extrémité de clip (103), de sorte que le bras de support (110) s'étend entre la première ailette de clip (104) et la seconde ailette de clip (105).

11. Assemblage formant porte-thermistance selon la revendication 10, dans lequel le bras de support (110) comprend une projection de blocage de capteur (111) sur son extrémité libre, en projection perpendiculairement au bras de support et à la base de clip allongée (101), ayant une projection d'arrêt de capteur (112) sur la première extrémité de clip (102), de sorte que la projection de blocage de capteur et la projection d'arrêt de capteur coopèrent avec la première extrémité de capteur (142) et la seconde extrémité de capteur (143) pour tenir le capteur thermique (140) en position.

12. Assemblage formant porte-thermistance selon la revendication 1 ou l'une quelconque des revendications 4 à 11, dans lequel le clip porte-thermistance (100) comprend une projection de blocage de clip (126), qui se projette perpendiculairement à la base de clip allongé (101) vers l'extérieur, la projection de blocage de clip est agencée sur l'extrémité libre d'un bras porte-clip flexible (124), ledit bras porte-clip flexible (124) se projetant depuis la base de clip allongée (101), de sorte que la projection de blocage de clip (126) s'étend dans une direction différente de la première ailette de clip (104) et de la seconde ailette de clip (105).

13. Assemblage formant porte-thermistance selon l'une quelconque des revendications précédentes, dans lequel le clip porte-thermistance (100) comprend au moins une nervure de guidage de clip (128) agencée sur et alignée le long de la base de clip allongée (101), de sorte que la cavité pour clip (52) comprend au moins une gorge de guidage de clip (58) alignée le long de l'axe d'accouplement (X) et coopérant avec la nervure de guidage de clip (128).

14. Assemblage formant porte-thermistance selon l'une quelconque des revendications précédentes, dans lequel la cavité pour clip (52) comprend au moins un bord de blocage de clip (54), de sorte qu'une projection de blocage de clip (126) agencée sur le clip porte-thermistance (100) engage le bord de blocage de clip et bloque le clip porte-thermistance (100) à l'intérieur de la cavité pour clip.
